# EUROPÄISCHE PATENTANMELDUNG

(11) **EP 1 466 525 A1**
(43) Veröffentlichungstag der Anmeldung: **13.10.2004**
(21) Anmeldenummer: 04008416.2
(22) Anmeldetag: 07.04.2004
(51) Int. Cl.: A01K 63/00, A01K 63/04

(54) **Rohrabschnittsstück**

(30) Priorität: 07.04.2003 DE 10316014
(71) Anmelder: Dähne, Philipp, 39240 Brumby (DE)
(72) Erfinder: Dähne, Philipp, 39240 Brumby (DE)
(74) Vertreter: Hössle Kudlek & Partner

(57) **Zusammenfassung**

Das erfindungsgemäße Rohrabschnittsstück zur Bereitstellung einer Flüssigkeit (80, 81) für einen Behälter (100) für lebende Wassertiere (120) weist ein feststehendes rohrförmiges Element (10, 11, 12) und ein beweglich gelagertes rohrförmiges Element (20, 21) auf. Diese beiden rohrförmigen Elemente (10, 11, 12, 20, 21) sind über ein Antriebselement (30) relativ zueinander drehbar.

## Beschreibung

Die Erfindung betrifft ein Rohrabschnittsstück zur Bereitstellung und Beeinflussung einer Flüssigkeit für einen Behälter für lebende Wassertiere und andere Wasserorganismen sowie eine Vorrichtung zur Strömungsverteilung mit einem Rohrabschnittsstück.

Sogenannte biologische Flüssigkeiten, im vorliegenden Fall Wasser, in dem sich Organismen und Nährstoffe, wie Sauerstoff befinden, kommen bspw. in Aquarien oder angelegten Teichen vor. Innerhalb dieser Aquarien oder Teiche bedarf es einer entsprechenden Wasser- oder Strömungsbewegung, damit eine darin existierende Mikro- bzw. Makrofauna nicht mangels eines unausgewogenen Nährstoffstransports abstirbt, dies wird u. a. als Ursache für ein biologisches Umkippen derartiger künstlich angelegter Lebensräume angesehen.

Es ist bekannt, daß z. B. im Bereich von Gartenteichen und Aquarien eine hierfür notwendige Durchflutung bzw. ein Wasserkreislauf mit gleichförmigen oder sich wiederholenden Bewegungen erzeugt wird. Die größtenteils starren, unbeweglichen Einlauf- bzw. Zulaufrohre erzeugen jedoch eher monotone, kreisförmige Strömungen, die nur teilweise eine befriedigende Nährstoffverteilung zulassen.

Derzeit auf dem Markt befindlichen Geräte bestehen typischerweise aus einer aus einer Umwälzpumpe mit beweglicher Düse sowie evtl. einer Filtereinheit zusammengesetzten Einheit, wobei es aber meist aufgrund der Größe, der optischen Platzierung und der entsprechend anfallenden Wartungsarbeiten bspw. bei einer Nutzung von Aquarien zu Einschränkungen kommt.

Darüber hinaus ist ein Drehgelenk bekannt, das allerdings, wie in der DE 101 35 533 A1 gezeigt, in Hochdruckvorrichtungen zu Anwendung kommt und somit für Aquarien und dergleichen nicht geeignet ist. Speziell für den Haushaltsbereich kommen ferner Einrichtungen wie ein drehbarer Einsatz für handelsübliche Schlauchnippel zu Umkehr einer Strömung (DE 199 51 162 A1), ein Schlauchanschluß für einen Haushaltsgeräts-Sicherheitsschlauch (DE 100 46 922 A1) oder Schlauchanschlußsysteme mit Schlauchkodierung (DE 101 16 566 A1) zur Anwendung.

In der Druckschrift DE 202 07 127 U1 wird ein Strömungsverteiler zum halbseitigen Eintauchen in Aquarien gezeigt. Ein Antrieb einer Wasseraustrittsöffnung erfolgt hier von innen durch den Strömungskanal. Diese Konstruktion läßt nur eine Strömungsverteilung, aber keine Zufuhr von entsprechenden Nährstoffen innerhalb des Aquariums zu.

Mit vorliegender Erfindung soll erreicht werden, in einfacher Weise eine verbesserte Versorgung von Aquarien, Teichen und dergleichen mit Flüssigkeiten, in denen Nährstoffe für Wassertiere gelöst sind, wie bspw. auch Sauerstoff, zu realisieren.

Hierzu wird eine Rohrabschnittsstück mit den Merkmalen des Patentanspruchs 1 sowie eine Vorrichtung zur Strömungsverteilung mit den Merkmalen des Patentanspruchs 11 vorgeschlagen.

Das erfindungsgemäße Rohrabschnittsstück zur Bereitstellung einer Flüssigkeit für einen Behälter für Wasserorganismen, wie lebende Wassertiere weist ein feststehendes rohrförmiges Element und ein beweglich gelagertes rohrförmiges Element auf. Diese beiden rohrförmigen Elemente sind über ein Antriebselement relativ zueinander drehbar. Bei Betrieb durchströmt die Flüssigkeit das Rohrabschnittsstück, wobei die Flüssigkeit nacheinander die beiden rohrförmigen Elemente durchfließt. Durch eine von dem Antriebselement erzeugte Relativbewegung der beiden rohrförmigen Elemente wird hierbei eine Strömungsrichtung der Flüssigkeit beeinflußt.

Der Behälter wird mit dem eigenangetriebenen Rohrabschnittsstück unter einer schwenkenden oder sich drehenden Bewegung mit Flüssigkeit versorgt. Somit wird innerhalb des Behälters, also einem Aquarium, Becken, Teich und dergleichen ein unregelmäßiger Strömungseinlauf erzeugt und innerhalb des Behälters eine sich verändernde Strömungsverteilung erzielt.

Die Erfindung funktioniert auch dann zuverlässig, wenn die Flüssigkeit aus Wasser besteht, in dem sich Nährstoffe oder Mikroorganismen für die Wassertiere befinden. Derartige biologische Flüssigkeiten können erfindungsgemäß unter Erzeugung von Turbulenzen in den Behälter einströmen und somit die Existenz eines darin befindlichen Ökosystems mit Wassertieren wie Fischen, Krebsen, Muscheln, Schnecken, Wasserinsekten, Wasserpflanzen, Amphibien usw. verbessern.

Es ist vorgesehen, daß das feststehende und/oder das bewegliche gelagerte rohrförmige Element mit Anschlußmöglichkeiten für rohrförmige Stücke ausgestattet ist, so daß an mindestens einem der beiden rohrförmigen Elemente ein rohrförmiges Stück, wie ein Rohr oder ein Schlauch, wasserdicht anbringbar ist. Somit kann das Rohrabschnittsstück als Zwischen- oder Endstück modular in auch bereits vorhandene Leitungen wie Rohre oder Schläuche zur Versorgung von Aquarien oder Teichen eingesetzt werden. Das Rohrabschnittsstück ist innen hohl, so daß ein ungehindertes Strömen der Flüssigkeit durch das Rohrabschnittstück gewährleistet ist. Die beiden rohrförmigen Elemente des erfindungsgemäßen Rohrabschnittsstück sind zudem zueinander koaxial angeordnet. Des weiteren weisen die Anschlußmöglichkeiten je nach Bedarf dimensionierte und/oder genormte Paßformen auf.

In bevorzugter Ausgestaltung weist das beweglich gelagerte rohrförmige Element des Rohrabschnittsstücks ein rohrförmiges Winkelstück auf. Die in das feststehende Element einströmende, insbesondere mit Nährstoffen angereicherte biologische Flüssigkeit fließt somit unter ständigem Richtungswechsel in den Behälter ein.

Mit der vorliegenden Erfindung ist eine vorteilhafte Strömungsdurchflutung biologischer Flüssigkeiten, wie von Teich- oder Aquarienwasser, möglich. Mit Hilfe des Antriebselements und des drehbaren gelagerten Rohrabschnittsstücks, bspw. Rohrzwischen- bzw. -endstücks in Verbindung mit einem beliebigen Düsenaufsatz, wird ein schwenkender oder drehender und somit unregelmäßiger Flüssigkeits- bzw. Strömungseinlauf sowie damit verbunden eine veränderbare Strömungsverteilung in dem jeweiligen Behälter, wie Teich oder Becken, für die darin lebende Wasserorganismen bzw. Wassertiere bereitgestellt.

Es ist vorgesehen, daß das Antriebselement als regulierbarer, elektrischer Motor mit entsprechender Übersetzung bzw. Geschwindigkeitsregelung ausgebildet ist. Eine Flüssigkeitsströmung ist somit mit einer derartigen Antriebsquelle beliebig einstellbar.

In vorteilhafter Ausführung der Erfindung ist das Antriebselement an dem feststehenden Element befestigt und weist ein Zahnrad auf, das in eine Zahnreihe des beweglichen Elements eingreift. Das Zahnrad kann dabei über eine Kraftübertragungswelle mit dem Antriebselement verbunden sein, wobei diese Kraftübertragungswelle durch eine im feststehenden Element befindliche Durchführung geführt ist. Durch diese Maßnahme wird eine Verdrehung des drehbar gelagerten Elements relativ zu dem feststehenden Element ermöglicht.

In weiterer Ausgestaltung weist das feststehende rohrförmige Element einen inneren und einen äußeren Rohrendabschnitt auf, die zueinander koaxial angeordnet sind und zwischen denen ein Rohrendabschnitt des beweglich gelagerten rohrförmigen Elements angeordnet, bspw. eingesteckt, ist.

Zwischen den beiden rohrförmigen Elementen des Rohrabschnittsstücks kann mindestens eine Dichtung zum verlustfreien Transport der bspw. durch externe Pumpkraft geförderte Flüssigkeit angeordnet sein. Somit ist eine Gas- und Flüssigkeitstrennung der durch das erfindungsgemäße Rohrabschnittsstück fließenden bzw. strömenden Flüssigkeit und der Umgebung gewährleistet.

Die durch externe Pumpkraft bereitgestellte biologische Flüssigkeit wird mit der Erfindung in dem Behälter individuell veränderbar verteilt, was eine effektive Durchspülung und damit verbunden eine bessere Sauerstoff- und Nährstoffverteilung innerhalb des Behälters zur Folge hat.

Zudem kann das Rohrabschnittsstück eine Arretierung zum Führen und Halten der beiden rohrförmigen Elemente aufweisen. Damit wird ein reibungsloser Bewegungsablauf der beiden rohrförmigen Elemente bei Betrieb des Rohrabschnittsstücks sowie eine Stabilität des Rohrabschnittsstücks gesichert

In bevorzugter Ausbildung des Rohrabschnittsstücks ist an dem feststehenden rohrförmigen Element mindestens ein Anschlag und an dem drehbar gelagerten rohrförmigen Element mindestens ein Loch zu Einbringung mindestens eines Steckelements angeordnet. Durch diese Maßnahme wird eine Drehbewegung des drehbar gelagerten Elements mit dem winkelförmigen Rohrstück relativ zu dem feststehenden Element auf ein definierbares Winkelintervall begrenzt. Ein oder zwei Steckelemente sind dabei frei wählbar in eines der Löcher einbringbar.

Die erfindungsgemäße Vorrichtung zur Strömungsverteilung weist ein erfindungsgemäßes Rohrabschnittsstück auf. Mit dieser Vorrichtung ist eine optimale Versorgung von Behältern mit lebenden Wassertieren und anderen Organismen mit biologischen Flüssigkeiten durch das eigenangetriebene, drehbare Rohrabschnittsstück gewährleistet.

Mit der Erfindung wird im Bereich von Gartenteichen oder Aquarien eine strömungsverbesserte Durchflutung von Flüssigkeiten erreicht. Das Rohrabschnittsstück befindet sich an dem entsprechenden Wasserzulauf und ist in einfacher Weise unabhängig von Pumpen- und Wasserkraft angetrieben. Das Rohrabschnittsstück ist leicht anzubringen und ist mit einer auf Wunsch einstellbaren, sich drehenden Einlaufvorrichtung bzw. Einlaufdüse ausstattbar.

Die mit der Erfindung erzielbaren Vorteile bestehen insbesondere darin, daß das am Wasserzulauf anzuordnende Rohrabschnittsstück eigenangetrieben ist und ein an dem beweglich gelagerten Element befestigtes rohrförmiges Winkelstück in eine Drehbewegung versetzt. Die durch externe Pumpenkraft erzeugte Wasserströmung wird nun verlustfrei und individuell veränderbar im Teich oder Aquarium verteilt, was eine effektivere Durchspülung und damit verbunden eine bessere Sauerstoff- und Nährstoffverteilung zur Folge hat.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt eine bevorzugte Ausführungsform des erfindungsgemäßen Rohrabschnittsstücks in schematischer Schnittdarstellung.
- Figur 2: zeigt das Rohrabschnittsstück gemäß Figur 1 in alternativer schematischer Darstellung.

Die Figuren werden zusammenhängend und übergreifend beschrieben, gleiche Bezugszeichen bezeichnen gleiche Bauteile.

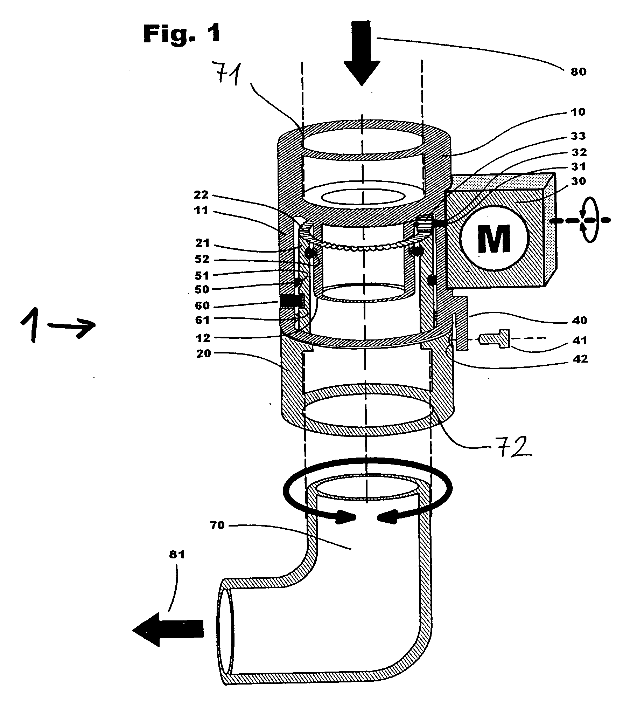

In dem in Figur 1 im Querschnitt dargestellten Ausführungsbeispiel des erfindungsgemäßen Rohrabschnittsstücks 1 zur strömungsverbessernden Durchflutung biologischer Flüssigkeiten, z. B. Wasser, das Nährstoffe und/oder Organismen enthält, umfaßt im wesentlichen ein oberes, rohrförmiges, feststehendes Element 10 mit einem äußeren Rohrendabschnitt 11 und einem dazu koaxial angeordneten inneren Rohrendabschnitt 12, ein daran beweglich gelagertes, rohrförmiges Element 20 mit einem Rohrendabschnitt 21 verringerten Durchmessers und ein an dem beweglich gelagerten, rohrförmigen Element 10 angebrachtes rohrförmiges Winkelstück 70.

Der Rohrendabschnitt 21 des beweglich gelagerten Elements 20 ist hierbei koaxial zwischen dem äußeren und inneren Rohrendabschnitt 11, 12 des feststehenden Elements 10 eingesetzt bzw. angeordnet.

Das obere, feststehende rohrförmige Element 10 mit den Rohrendabschnitten 11, 12 und das untere, beweglich gelagerte rohrförmige Element 20 mit dem Rohrendabschnitt 21 durch in Nuten 51 eingesetzte Dichtungsringe 50, 52 und eine in einer Nut 61 eingesetzten Arretierung 60 sind derart miteinander verbunden, daß der Rohrendabschnitt 21 des unteren drehbaren Elements 20 innerhalb der Rohrendabschnitte 11, 12 des oberen feststehenden Elements 10 bewegbar ist.

Am oberen, feststehenden rohrförmigen Element 10 sowie an dem unteren, beweglich gelagerten rohrfömigen Element 20 können aufgrund eingebrachter, genormter Steckeinführungen bzw. Anschlußmöglichkeiten 71, 72 individuell Schläuche, Rohre oder Winkelstücke 70 angeschlossen werden.

Das an dem oberen, feststehenden rohrförmigen Element 10 angebrachte Antriebselement 30 weist eine wahlweise zweckdienliche Übersetzung bzw. Geschwindigkeitsreglung auf und ist mit einer Kraftübertragungswelle 31 sowie einem daran befestigten Zahnrad 33 ausgestattet. Die Kraftübertragungswelle 31 ist durch eine in dem äußeren Rohrendabschnitt 11 des oberen, feststehenden rohrförmigen Elements 10 befindliche Durchführung 32 hindurchgeführt. Das Zahnrad 33 greift in eine Zahnreihe 22 am Rohrendabschnitt 21 des unteren, rohrförmigen beweglich gelagerten Elements 20 zur Kraft- bzw. Bewegungsübertragung ein.

Eine Kraft- bzw. Bewegungsübertragung kann anstelle von Zahnrädern 33 und Zahnreihen 22 auch über Riemenantrieb, Kettenantrieb, Pendelhubantrieb, Reibeantrieb, Antriebswellen oder dergleichen erfolgen.

An einem seitlichen Rand des Rohrendabschnitts 11 des oberen, feststehenden Elementes 10 befindet sich mindestens ein Anschlag 40. Am unteren Element 20 befindet sich mindesten ein Loch 42 zur Einbringung von mindestens einem Steckelement 41, wobei die gewünschte Anordnung von Anschlag 40 und Steckelement 41 einer Arretierung des oberen, feststehenden Elements 10 und des unteren, drehbar gelagerten Elements 20 dient. Zudem ist hiermit möglich, daß insbesondere mit zwei frei wählbar eingebrachten Steckelementen 41 ein Winkelintervall festgelegt wird, innerhalb dem sich das untere, beweglich gelagerte Element 20 in gewünschter Weise relativ zu dem feststehenden Element 10 hin- und herdreht, wobei der Anschlag 40 am oberen Element 10 einer Drehrichtungsänderung des beweglich gelagerten Elements 20 dient, sobald eines der Steckelemente 41 bei der Drehbewegung den Anschlag 40 berührt.

Wasser 80, das in Pfeilrichtung in das feststehende Element 10 einströmt, strömt bei Betrieb des Rohrabschnittsstücks 1 in Pfeilrichtung über das drehbar gelagerte Element 20 aus dem sich gemäß des Doppelpfeils drehenden rohrförmigen Winkelstück 70 als umgelenkt strömendes Wassers 81 in unterschiedliche Richtungen aus. Ein Transport des Wassers 80 zunächst durch das feststehenden Element 10 und nachfolgend dem beweglich gelagerten Element 20 erfolgt aufgrund der dazwischen angeordneten Dichtungen 50, 52 verlustfrei.

Als direkte oder indirekte Antriebsquelle 30 ist jeder Motor, jede motor- oder magnetbetriebene Pumpe, Kompressor, Strömungs-, Wasserstrahl-, Magnetimpuls-, Frequenz-, Luftdruckpumpe oder dergleichen geeignet, wobei auch die Übertragung von einer externen Antriebsquelle mittels Gewindestange, Bowdenzug, Seilzug, Antriebswelle oder dergleichen dienlich sein kann.

Die erfindungsgemäße Rohrabschnittsstück 1 kann aus geeignetem Material wie Metall, Kunststoff, Gummi oder andersartigen Materialien sowie Kombinationen der vorstehend genannten Materialien ausgebildet sein, die zur Realisierung der Erfindung dienliche Eigenschaften aufweisen.

Die Erfindung ist vorteilhafterweise auf eine jeweilige Anwendung individuell abgestimmt und ist in ihrer Dimensionierung und Materialauswahl vorzugsweise derart realisiert, daß sie den jeweiligen Anforderungen gerecht wird.

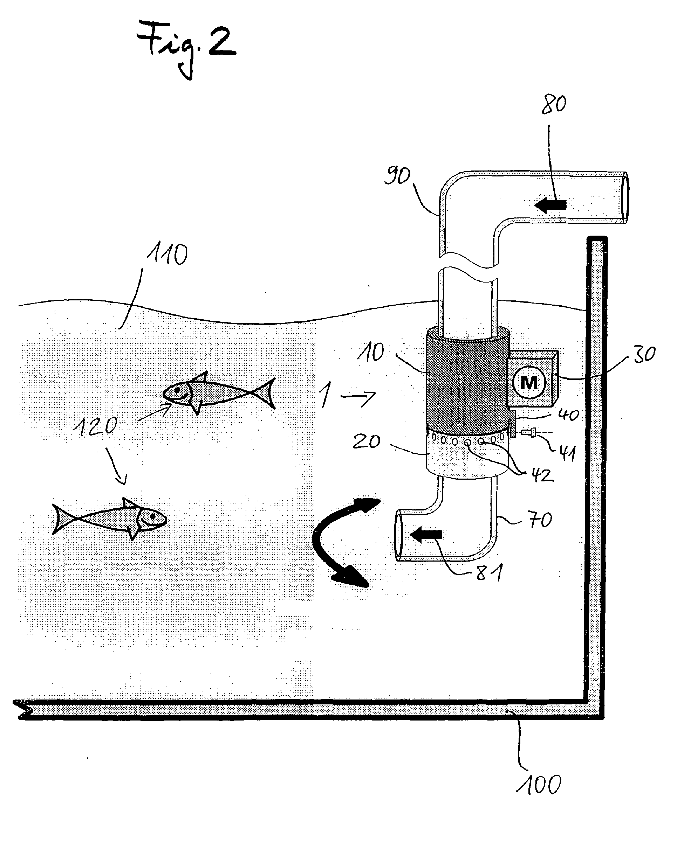

Figur 2 zeigt das erfindungsgemäße Rohrabschnittsstück 1 der Figur 1 bei einer Anwendung in einem mit Wasser 110 gefüllten Aquarium 100, in dem sich Fische 120 befinden. Hier ist das Rohrabschnittsstück 1 mit dem feststehenden Element 10 an einem Rohr 90 befestigt, über das sauer- und/oder nährstoffhaltiges Wasser 80 in Pfeilrichtung gefördert wird und das erfindungsgemäße Rohrabschnittsstück 1 durchströmt.

Durch das Antriebselement 30 wird das beweglich gelagerte Element 20 und somit das daran befestigte rohrförmige Winkelstück 70 in eine durch geeignete Anordnung von Steckelementen 41 in den Öffnungen 42 durch Berührung mit dem Anschlag 40 definierte hin- und hergerichtete Schwenkbewegung (gebogener Doppelpfeil) unter Richtungsänderung relativ zu dem feststehenden Element 10 und somit dem Rohr 90 versetzt. Falls man auf Anordnung der Steckelemente 41 verzichtet, ist es möglich, daß das drehbar gelagerte Element 20 und somit das rohrförmige Winkelstück 70 eine durchgängige Drehbewegung um 360° ausführt.

Aus dem rohrförmigen Winkelstück 70 in Pfeilrichtung austretendes Wasser 81 strömt vorteilhafterweise kontinuierlich in unterschiedlicher Richtung in das Aquarium 100 ein, so daß das darin befindliche Wasser 110 unter Bildung von Turbulenzen strömungsverbessert durchflutet wird. Somit wird innerhalb des Aquariums 100 ein für die darin lebenden Fische 120 vorteilhafter Wasser- und somit Nähr- und Sauerstoffkreislauf bereitgestellt.

## Patentansprüche

1. Rohrabschnittsstück zur Bereitstellung einer Flüssigkeit (80, 81) für einen Behälter (100) für Wasserorganismen (120), das ein feststehendes rohrförmiges Element (10, 11, 12) und ein beweglich gelagertes rohrförmiges Element (20, 21) aufweist, wobei die beiden rohrförmigen Elemente (10, 11, 12, 20, 21) über ein Antriebselement (30) relativ zueinander drehbar sind.

2. Rohrabschnittsstück nach Anspruch 1, bei dem mindestens eines der beiden rohrförmigen Elemente (10, 11, 12, 20, 21) mit einer Anschlußmöglichkeit (71, 72) für ein rohrförmiges Stück (70, 80) ausgestattet ist.

3. Rohrabschnittsstück nach Anspruch 1 oder 2, bei dem das beweglich gelagerte rohrförmige Element (20, 21) ein rohrförmiges Winkelstück (70) aufweist.

4. Rohrabschnittsstück nach einem der vorstehenden Ansprüche, bei dem das Antriebselement (30) als regulierbarer, elektrischer Motor mit innenliegender Übersetzung ausgebildet ist.

5. Rohrabschnittsstück nach einem der vorstehenden Ansprüche, bei dem die beiden rohrförmigen Elemente (10, 11, 12, 20, 21) zueinander koaxial angeordnet sind.

6. Rohrabschnittsstück nach einem der vorstehenden Ansprüche, bei dem das Antriebselement (30) an dem feststehenden Element (10, 11, 12) befestigt ist und ein Zahnrad (31) aufweist, das in eine Zahnreihe (22) des beweglichen Elements (20, 21) eingreift.

7. Rohrabschnittsstück nach einem der vorstehenden Ansprüche, bei dem das feststehende rohrförmige Element (10) einen inneren und einen äußeren Rohrendabschnitt (11, 12) aufweist, die koaxial zueinander angeordnet sind und zwischen denen ein Rohrendabschnitt (21) des beweglich gelagerten rohrförmigen Elements (20) angeordnet ist.

8. Rohrabschnittsstück nach einem der vorstehenden Ansprüche, bei dem zwischen den beiden rohrförmigen Elementen (10, 11, 12, 20, 21) mindestens eine Dichtung (50) angeordnet ist.

9. Rohrabschnittsstück nach einem der vorstehenden Ansprüche, das eine Arretierung (60) zum Führen und Halten der beiden rohrförmigen Elemente (10, 11, 12, 20, 21) aufweist.

10. Rohrabschnittsstück nach einem der vorstehenden Ansprüche, bei dem an dem feststehenden rohrförmigen Elemente (10, 11, 12) mindestens ein Anschlag (40) und an dem drehbar gelagerten rohrförmigen Element (20, 21) mindestens ein Loch (42) zu Einbringung mindestens eines Steckelements (41) angeordnet ist.

11. Vorrichtung zur Strömungsverteilung mit einem Rohrabschnittsstück (1) nach einem der Ansprüche 1 bis 10.
